# EUROPEAN PATENT APPLICATION

(11) **EP 4 822 426 A1**
(43) Date of publication of application: **14.10.2026**
(21) Application number: 24914888.3
(22) Date of filing: 13.09.2024
(51) Int. Cl.: G02B 27/48

(54) **SPECKLE REDUCTION DEVICE, PROJECTION OPTICAL SYSTEM AND PROJECTION APPARATUS**

(30) Priority: 02.01.2024 CN 202410007298
(71) Applicant: Huawei Technologies Co., Ltd., Shenzhen, Guangdong 518129 (CN)
(72) Inventor: WU, Hao, Shenzhen, Guangdong 518129 (CN); SHI, Guangyuan, Shenzhen, Guangdong 518129 (CN)
(74) Representative: Pfenning, Meinig & Partner mbB
(86) International application number: PCT/CN2024/118790
(87) International publication number: WO 2025/145666

(57) **Abstract**

This application relates to the field of projection optical system technologies, and discloses a speckle reduction apparatus disposed in a projection optical system. The speckle reduction apparatus includes a polarization conversion element and a vibration mechanism. At least two sub-regions are disposed on the polarization conversion element, and at least one of the sub-regions is capable of converting a polarization state of the first light beam incident thereon, so that the polarization conversion element outputs the first light beam with at least two different polarization states. The vibration mechanism is connected to the polarization conversion element, and the vibration mechanism is configured to drive the polarization conversion element to vibrate. In this application, a speckle effect on a projected image can be reduced, and viewing experience of a user can be enhanced. This application further discloses a projection optical system and a projection device.

## Description

This application claims priority to Chinese Patent Application No. 202410007298.2, filed with the China National Intellectual Property Administration on January 2, 2024 and entitled "SPECKLE REDUCTION APPARATUS, PROJECTION OPTICAL SYSTEM, AND PROJECTION DEVICE", which is incorporated herein by reference in its entirety.

### TECHNICAL FIELD

This application relates to the field of laser display technologies, and in particular, to a speckle reduction apparatus, a projection optical system, and a projection device.

### BACKGROUND

Currently, image display apparatuses have been widely used in people's work and life, for example, projection devices, VR, AR, and projection modules of 3D printing devices. Many existing projection devices use laser light sources. A laser light source is a coherent light source. When laser light is scattered by a rough surface, mutual interference occurs, resulting in "noise" in a projected image. This phenomenon is referred to as laser speckle.

In the conventional technology, laser speckle is the most significant drawback of a laser display apparatus. The presence of the laser speckle causes a decrease in definition of a projected image, and makes a human eye more prone to fatigue during viewing, thereby severely affecting viewing experience of a user.

### SUMMARY

This application provides a speckle reduction apparatus, a projection optical system, and a projection device, which can reduce laser speckle of a projected image and enhance user experience.

According to a first aspect, this application provides a speckle reduction apparatus. The speckle reduction apparatus is disposed in a projection optical system, a first light beam in the projection optical system is incident to the speckle reduction apparatus along a direction perpendicular to the speckle reduction apparatus, and the speckle reduction apparatus can reduce a speckle contrast of the first light beam, to achieve a speckle reduction effect.

The speckle reduction apparatus provided in this application includes a polarization conversion element and a vibration mechanism. At least two sub-regions are disposed on the polarization conversion element, and at least one of the sub-regions is capable of converting a polarization state of the first light beam incident thereon, so that the polarization conversion element outputs the first light beam with at least two different polarization states. The vibration mechanism is connected to the polarization conversion element, and the vibration mechanism is configured to drive the polarization conversion element to vibrate. For example, a vibration frequency of the polarization conversion element ranges from 30 Hz to 240 Hz.

When the first light beam passes through the polarization conversion element, because the at least one of the sub-regions on the polarization conversion element is capable of converting the polarization state of the first light beam incident thereon, the polarization conversion element can output the first light beam with the at least two different polarization states, that is, output at least two types of polarized light with different polarization states. Because the polarization states of the polarized light are different, speckle patterns generated by the polarized light are independent of each other or have low correlation. The speckle patterns that are independent of each other or have low correlation are superimposed on a screen, so that the speckle contrast can be reduced, thereby achieving the speckle reduction effect and enhancing user experience. In addition, in this application, the vibration mechanism is disposed to drive the polarization conversion element to perform reciprocating vibration, so that additional polarization diversity can be introduced. When the polarization conversion element is located at different positions during vibration, speckle patterns generated by the polarized light output by the polarization conversion element are different. The different speckle patterns superimpose on each other within one human eye integration period, thereby further enhancing the speckle reduction effect.

In some implementations of this application, the vibration mechanism includes a spring plate and an electromagnetic induction mechanism. An opening is provided in the spring plate, and the polarization conversion element covers the opening. The electromagnetic induction mechanism is configured to drive the spring plate and the polarization conversion element to vibrate.

In some implementations of this application, the spring plate has a rectangular outer contour, and the vibration mechanism is capable of driving the polarization conversion element to perform translational vibration in a plane in which the polarization conversion element is located, or rocking vibration about a rotation axis perpendicular to an incident direction of the first light beam, or rocking vibration about a plurality of rotation axes simultaneously.

When the polarization conversion element performs translational vibration, a vibration direction of the polarization conversion element is a length direction, a width direction, or a diagonal direction of the spring plate.

When the polarization conversion element performs rocking vibration, the rotation axis extends along the length direction of the spring plate, or extends along the width direction of the spring plate, or extends along the diagonal direction of the spring plate.

In some implementations of this application, the first light beam output by the polarization conversion element is capable of being decomposed into two pieces of polarized light whose polarization directions are orthogonal to each other, and an energy ratio of the two pieces of polarized light ranges from 4:6 to 6:4. Preferably, the energy ratio of the two pieces of polarized light is 1:1. The inventors have discovered through exploration that when light incident on any point on the screen is formed by superposition of two beams of light having equal energy and mutually orthogonal polarization directions, the speckle reduction effect can be enhanced. Therefore, the foregoing technical solution can further enhance the speckle reduction effect.

In some implementations of this application, at least one first sub-region and at least one second sub-region are disposed on the polarization conversion element, polarization directions of the first light beam output by the first sub-region and the second sub-region are orthogonal to each other, and a sum of areas of the first sub-regions is equal to a sum of areas of the second sub-regions. For example, the first sub-region is made of a transparent glass sheet, and the polarization direction of the first light beam incident on the first sub-region remains unchanged after passing through the first sub-region. The second sub-region has a half-wave phase delay, and the polarization direction of the first light beam incident on the second sub-region is orthogonal to that before incidence after passing through the second sub-region.

In some implementations of this application, there is one first sub-region and one second sub-region, and an area of the first sub-region is equal to an area of the second sub-region.

In some implementations of this application, a quantity of the sub-regions is greater than or equal to three, and the sub-regions are sequentially arranged along a first direction. Along the first direction, a crystal axis direction of each sub-region is gradually rotated along a first rotation direction, or a phase delay amount of each sub-region gradually increases or decreases. In this application, the crystal axis direction or the phase delay amount of each sub-region is set to vary continuously across the spatial distribution. This continuous variation may avoid an optical diffraction effect caused by an excessively large gradient in the crystal axis direction or phase variation, thereby avoiding problems such as an excessive optical loss and introduction of stray light.

According to a second aspect, this application provides a projection optical system, including the speckle reduction apparatus according to the first aspect, and further including a light-emitting unit and a lens assembly that are sequentially disposed along a propagation direction of the first light beam. The light-emitting unit is configured to emit the first light beam, and the first light beam carries image information. The lens assembly is configured to magnify the first light beam. The speckle reduction apparatus is disposed on a light incident side outside the lens assembly or disposed inside the lens assembly, the first light beam output by the speckle reduction apparatus is magnified by the lens assembly and then emitted, and the magnified first light beam is used to display an image corresponding to the image information.

In some implementations of this application, the speckle reduction apparatus is disposed between an output end of the light-emitting unit and an input end of the lens assembly. The vibration mechanism is a pixel dithering device disposed between the output end of the light-emitting unit and the input end of the lens assembly. The pixel dithering device includes a spring plate, the spring plate can generate vibration, and the polarization conversion element covers an opening of the spring plate. In this application, the polarization conversion element is integrated into the pixel dithering device, so that a structure of the apparatus can be simplified, a size of the apparatus can be reduced, and costs can be saved.

In some implementations of this application, an aperture stop is disposed in the lens assembly, and the speckle reduction apparatus is disposed on a light incident side of the aperture stop or is disposed on a light exit side of the aperture stop. For example, a spacing between the polarization conversion element and the aperture stop is less than or equal to 10 mm. The applicants have discovered through exploration that when the first light beam passes through the aperture stop, energy of the light is distributed more evenly, and the light passing through any spatial location on the aperture stop contributes with equal weight to any point on the screen. Therefore, in this application, the polarization conversion element is disposed near the aperture stop, so that light at any point on the screen is obtained by superposing polarized light output by the polarization conversion element, thereby further enhancing a speckle reduction effect.

Further, at least one first sub-region and at least one second sub-region are disposed on the polarization conversion element disposed on the light incident side or the light exit side of the aperture stop, polarization directions of the first light beam output by the first sub-region and the second sub-region are orthogonal to each other, and a sum of areas of the first sub-regions is equal to a sum of areas of the second sub-regions. This design may allow light incident on any point of the screen to be formed by superposition of two beams of light that respectively pass through the first sub-region and the second sub-region and that have equal energy and mutually orthogonal polarization directions, so that the speckle reduction effect can be optimal.

In some implementations of this application, the light-emitting unit includes a laser light source and a display device. The laser light source is configured to emit a laser light beam. The display device is configured to load the image information onto a laser light beam, to form the first light beam.

In some implementations of this application, an illumination shaping optical path is disposed between the laser light source and the display device, and the illumination shaping optical path is configured to: homogenize and shape the laser light beam emitted by the laser light source, and guide the homogenized and shaped laser light beam onto the display device. A diffuser is disposed on the illumination shaping optical path, the diffuser is capable of performing translational vibration in a plane in which the diffuser is located or rotating about an axis perpendicular to the plane in which the diffuser is located, and the diffuser is configured to reduce coherence of the laser light beam in spatial distribution on an incident surface of the polarization conversion element. For example, the diffuser may be a diffuser wheel or a vibrating diffuser plate. The diffuser wheel may include an annular diffuser plate and a motor. The motor is disposed in a middle part of the annular diffuser plate, and can drive the annular diffuser plate to rotate about an axis of the annular diffuser plate. The vibrating diffuser plate may include a dithering device and a rectangular diffuser plate. The rectangular diffuser plate is disposed on the dithering device, and the dithering device can drive the rectangular diffuser plate to perform reciprocating vibration. Specifically, a surface of the diffuser plate has irregular protrusions and recesses. When passing through the diffuser plate, the first light beam is subject to a scattering effect of the diffuser plate, so that light emitted by the diffuser plate has random angles and phases. Speckle patterns introduced by light of different angles and phases are different, and superposition of these different speckle patterns on the screen are capable of achieving speckle reduction. In addition, in this application, the diffuser plate is configured to rotate or dither, so that when the diffuser plate is at different positions, speckle patterns generated by output light may be different, thereby further enhancing the speckle reduction effect.

In some implementations of this application, when the diffuser performs translational vibration in the plane in which the diffuser is located, a vibration amplitude of the diffuser is greater than or equal to 0.1 mm in one human eye integration period.

According to a third aspect, this application provides a projection device, including the projection optical system according to the second aspect.

### BRIEF DESCRIPTION OF DRAWINGS

FIG. 1 is a diagram of an optical system of a single-chip LCOS projector;
FIG. 2 is a diagram of an optical system of a three-chip LCOS projector;
FIG. 3 is a diagram of an optical system of a single-chip DLP projector;
FIG. 4 is a diagram of an optical system of a three-chip LCD projector;
FIG. 5(a) is a diagram 1 of a speckle reduction apparatus according to some embodiments of this application;
FIG. 5(b) is a diagram 2 of a speckle reduction apparatus according to some embodiments of this application;
FIG. 6 is a diagram of a vibration mechanism according to some embodiments of this application;
FIG. 7(a) is a diagram 1 of a polarization conversion element performing translational vibration according to some embodiments of this application;
FIG. 7(b) is a diagram 2 of a polarization conversion element performing translational vibration according to some embodiments of this application;
FIG. 7(c) is a diagram 3 of a polarization conversion element performing translational vibration according to some embodiments of this application;
FIG. 7(d) is a diagram 4 of a polarization conversion element performing translational vibration according to some embodiments of this application;
FIG. 8(a) is a diagram 1 of a polarization conversion element performing rocking vibration according to some embodiments of this application;
FIG. 8(b) is a diagram 2 of a polarization conversion element performing rocking vibration according to some embodiments of this application;
FIG. 8(c) is a diagram 3 of a polarization conversion element performing rocking vibration according to some embodiments of this application;
FIG. 8(d) is a diagram 4 of a polarization conversion element performing rocking vibration according to some embodiments of this application;
FIG. 9 is a diagram 1 of a polarization conversion element according to some embodiments of this application;
FIG. 10 is a diagram 2 of a polarization conversion element according to some embodiments of this application;
FIG. 11 is a diagram 3 of a polarization conversion element according to some embodiments of this application;
FIG. 12 is a diagram 4 of a polarization conversion element according to some embodiments of this application;
FIG. 13 is a diagram of a polarization conversion element disposed on a light incident side of a lens assembly according to some embodiments of this application;
FIG. 14 is a diagram of a polarization conversion element disposed on a light incident side of an aperture stop according to some embodiments of this application;
FIG. 15 is a diagram of a polarization conversion element disposed on a light exit side of an aperture stop according to some embodiments of this application;
FIG. 16 is a diagram of a location of a diffuser according to some embodiments of this application;
FIG. 17 is a block diagram of a structure of a projection device according to some embodiments of this application;
FIG. 18(a) is a diagram 1 of an application scenario of a projection device according to some embodiments of this application;
FIG. 18(b) is a diagram 2 of an application scenario of a projection device according to some embodiments of this application;
FIG. 18(c) is a diagram 3 of an application scenario of a projection device according to some embodiments of this application; and
FIG. 19 is a diagram of a location of a speckle reduction apparatus disposed in a three-chip projection device according to some embodiments of this application.

Descriptions of reference numerals:
1: light-emitting unit; 11: laser light source; 12: display device; 121: LCOS display device; 122: DMD display device; 123: LCD display device; 13: polarization beam splitter; 14: total internal reflection prism; 15: beam combining prism; 16: illumination shaping optical path; 17: analyzer;
2: lens assembly; 21: aperture stop;
3: screen;
4: polarization conversion element; 41: sub-region; 42: first sub-region; 43: second sub-region;
5: vibration mechanism; 51: spring plate; 52: opening;
6: diffuser; 61: diffuser plate;
7: image processing unit;
8: drive unit;
9: target surface;
10: first polarized light;
20: second polarized light;
100: speckle reduction apparatus;
200: projection device.

### DESCRIPTION OF EMBODIMENTS

To make the objectives, technical solutions, and advantages of this application clearer, the following further describes implementations of this application in detail with reference to the accompanying drawings.

An embodiment of this application provides a speckle reduction apparatus. The speckle reduction apparatus is disposed in a projection optical system. The projection optical system is an optical system that can project an image or a video onto a screen or a target surface. Performance of the projection optical system is mainly related to a light source technology used. A laser light source is the latest generation of light source technology of the projection optical system. This technology uses red, green, and blue laser light directly as a light source of the projection optical system. Compared with the previous generation of LED and lamp illumination sources, the laser light source has the advantages of high brightness, wide color gamut, and high luminous efficacy.

In this application, the projection optical system may be applied to a projection device, VR, AR, and an HUD (head-up display, head-up display), and may be further applied to a projection module of a 3D printing device and a 3D scanning device. This is not limited in this application. The following uses an example in which the projection optical system is applied to a projection device for description.

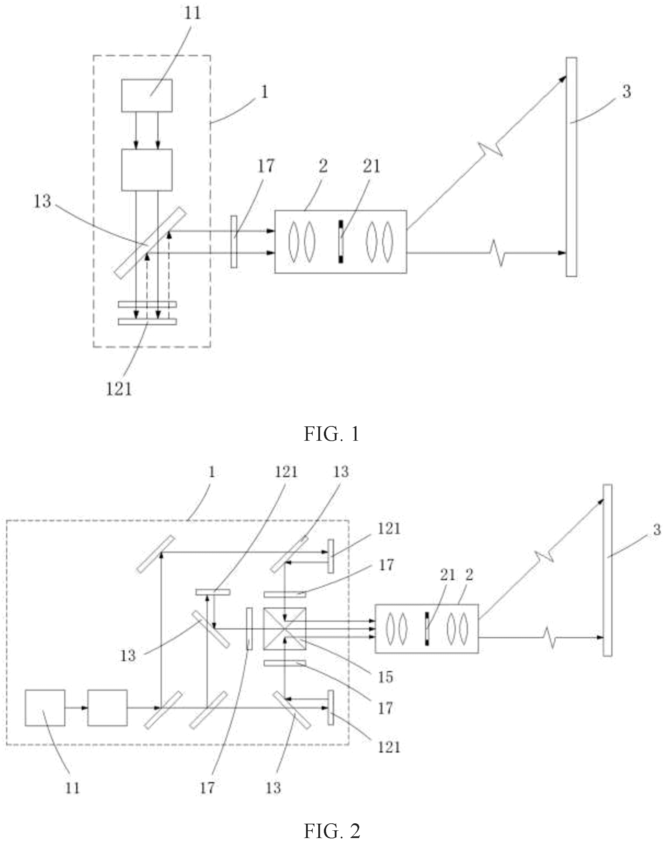

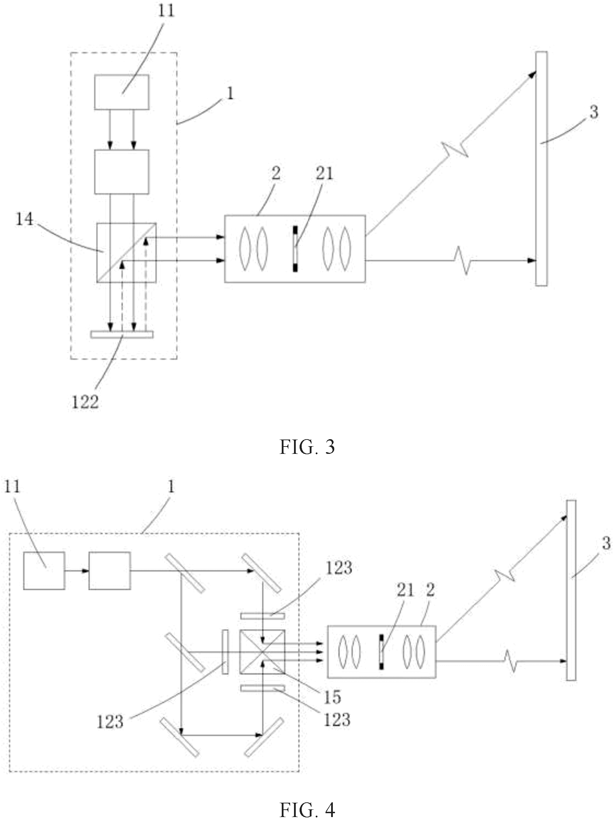

FIG. 1 to FIG. 4 are diagrams of examples of a projection optical system according to an embodiment of this application. FIG. 1 is a diagram of an optical system of a single-chip LCOS (liquid crystal on silicon) projector. FIG. 2 is a diagram of an optical system of a three-chip LCOS projector. FIG. 3 is a diagram of an optical system of a single-chip DLP (digital light processing) projector. FIG. 4 is a diagram of an optical system of a three-chip LCD (liquid crystal display) projector. Each of the foregoing projection devices includes a light-emitting unit 1 and a lens assembly 2. Due to different working mechanisms of the optical systems, the light-emitting units 1 vary in internal configuration. However, the light-emitting units 1 are all configured to emit a light beam outward. Because a light beam carries image information for displaying an image or a video, such a light beam is referred to as image light in this scenario.

Further, refer to FIG. 1. The light-emitting unit 1 of the single-chip LCOS projector includes a laser light source 11, a polarization beam splitter (PBS) 13, and an LCOS display device 121, and a color image is achieved by time-sequential RGB illumination. Refer to FIG. 2. The light-emitting unit 1 of the three-chip LCOS projector includes a laser light source 11, a polarization beam splitter (PBS) 13, three LCOS display devices 121, and a beam combining prism 15. The three LCOS display devices 121 respectively display RGB images, and the beam combining prism 15 combines the RGB images into a color image. Refer to FIG. 3. The light-emitting unit 1 of the single-chip DLP projector includes a laser light source 11, a total internal reflection prism (TIR) 14, and a DMD display device 122, and a color image is achieved by time-sequential RGB illumination. Refer to FIG. 4. The light-emitting unit 1 of the three-chip LCD projector includes a laser light source 11, three LCD display devices 123, and a beam combining prism 15. The three LCD display devices 123 respectively display RGB images, and the beam combining prism 15 combines the RGB images into a color image.

The lens assembly 2 is configured to: magnify image light and project the magnified image light onto a screen 3. The lens assembly 2 may be a lens group commonly used in an optical system, for example, a projection lens.

In a process of using the projection devices, laser speckle appears in a projected image. This is because all light sources used by the projection devices are laser light sources, and the laser light sources are coherent light sources. After laser light is scattered by a screen with a rough surface, mutual interference occurs, resulting in speckle. The presence of the speckle causes a decrease in definition of the projected image, and makes a human eye more prone to fatigue during viewing, thereby severely affecting viewing experience of a user.

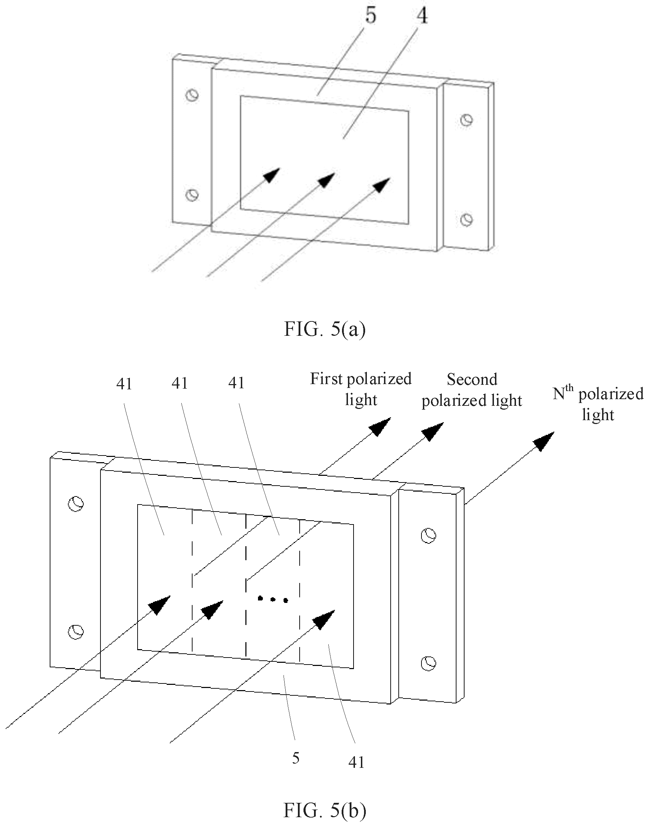

This application provides a speckle reduction apparatus. Refer to FIG. 5(a) and FIG. 5(b). The speckle reduction apparatus includes a polarization conversion element 4 and a vibration mechanism 5. A plane in which the polarization conversion element 4 is located is perpendicular to an incident direction (as shown by an arrow direction in FIG. 5(a)) of a first light beam generated by a projection optical system. At least two sub-regions 41 (as shown in FIG. 5(b)) are disposed on the polarization conversion element 4, and at least one of the sub-regions 41 is capable of converting a polarization state of the first light beam incident thereon, so that the polarization conversion element 4 outputs the first light beam with at least two different polarization states. The vibration mechanism 5 is connected to the polarization conversion element 4, and the vibration mechanism 5 is configured to drive the polarization conversion element 4 to vibrate.

When the first light beam passes through the polarization conversion element 4, because the at least one of the sub-regions 41 on the polarization conversion element 4 is capable of converting the polarization state of the first light beam incident thereon, the polarization conversion element 4 can output the first light beam with the at least two different polarization states, that is, output at least two types of polarized light with different polarization states, for example, first polarized light, second polarized light, and N^{th} polarized light shown in FIG. 5(b). Because the polarization states of the polarized light are different, speckle patterns generated by the polarized light are independent of each other or have low correlation. The speckle patterns that are independent of each other or have low correlation are superimposed on a screen, so that a speckle contrast can be reduced, thereby achieving a speckle reduction effect and enhancing user experience.

In addition, in this application, the vibration mechanism 5 is disposed to drive the polarization conversion element 4 to perform reciprocating vibration, so that additional polarization disturbance may be introduced. When the polarization conversion element 4 vibrates, the polarization state of the first light beam emitted from a same spatial location changes over time, so that speckle patterns generated by polarized light output by the polarization conversion element 4 are different. The different speckle patterns superimpose on each other within one human eye integration period, thereby further enhancing the speckle reduction effect.

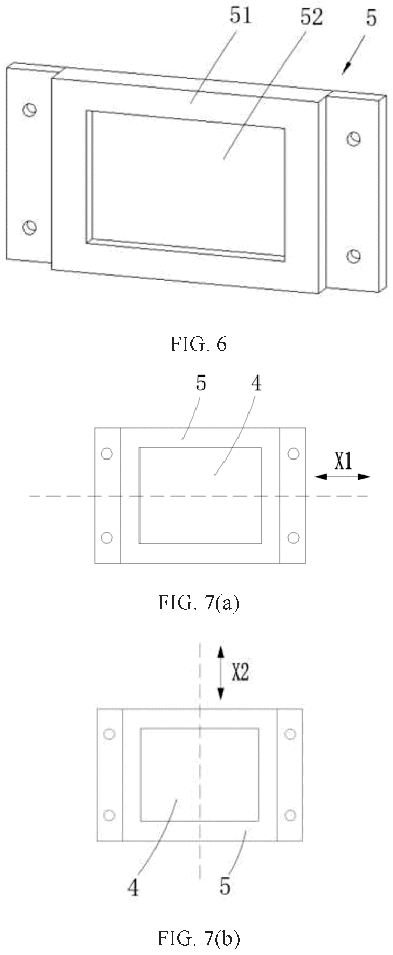

In some implementations of this application, with reference to FIG. 5(a) and FIG. 6, the vibration mechanism 5 includes a spring plate 51 and an electromagnetic induction mechanism (not shown in the figures). An opening 52 is provided in the spring plate 51, and the polarization conversion element 4 covers the opening 52. The electromagnetic induction mechanism can drive the spring plate 51 and the polarization conversion element 4 to vibrate. For example, the spring plate 51 includes an outer frame and an inner frame (not shown in the figures), and the polarization conversion element 4 covers the inner frame. An elastic connection arm is disposed between the outer frame and the inner frame, the inner frame is connected to the outer frame via the elastic connection arm, and the inner frame can vibrate relative to the outer frame. The electromagnetic induction mechanism includes a coil and a magnet, and the coil is connected to the inner frame. When the coil is energized, the coil interacts with the magnet to generate an electromagnetic force, and the electromagnetic force can drive the inner frame to vibrate, so that the polarization conversion element 4 vibrates. Because the coil is energized by a periodic signal, the vibration of the polarization conversion element 4 has a specific frequency. For example, the vibration frequency of the polarization conversion element 4 may range from 30 Hz to 240 Hz, for example, 30 Hz, 60 Hz, 120 Hz, 180 Hz, or 240 Hz.

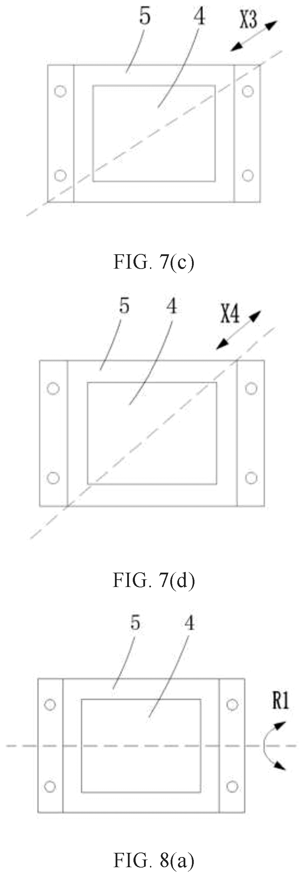

In some implementations of this application, the spring plate 51 has a rectangular outer contour, and the vibration mechanism 5 is capable of driving the polarization conversion element 4 to perform translational vibration in a plane in which the polarization conversion element 4 is located (as shown in FIG. 7(a) to FIG. 7(d)), or rocking vibration about a rotation axis perpendicular to an incident direction of the first light beam (as shown in FIG. 8(a) to FIG. 8(d)), or rocking vibration about a plurality of rocking axes simultaneously.

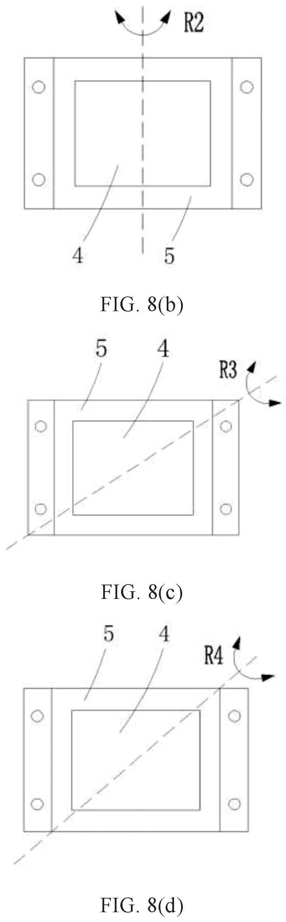

A vibration direction of the polarization conversion element 4 is not limited in this application. When the polarization conversion element 4 performs translational vibration, the vibration direction of the polarization conversion element 4 is a length direction (as shown by a direction X1 in FIG. 7(a)), a width direction (as shown by a direction X2 in FIG. 7(b)), a diagonal direction (as shown by a direction X3 in FIG. 7(c)), or a direction (as shown by a direction X4 in FIG. 7(d)) obtained by rotating a specific angle relative to the diagonal direction of the spring plate 51. When the polarization conversion element 4 performs rocking vibration, the rotation axis extends along the length direction of the spring plate 51, and the polarization conversion element 4 rotates along a direction R1 shown in FIG. 8(a); or the rotation axis extends along the width direction of the spring plate 51, and the polarization conversion element 4 rotates along a direction R2 shown in FIG. 8(b); or the rotation axis extends along the diagonal direction of the spring plate 51, and the polarization conversion element 4 rotates along a direction R3 shown in FIG. 8(c); or an extension direction of the rotation axis forms a specific angle with a diagonal line of the spring plate 51, and the polarization conversion element 4 rotates along a direction R4 shown in FIG. 8(d). When the polarization conversion element 4 performs rocking vibration, the polarization conversion element 4 rotates by a specific angle about a rotation axis perpendicular to the incident direction of the first light beam. In this case, the first light beam passing through the polarization conversion element 4 undergoes a displacement perpendicular to the incident direction of the first light beam due to a refraction effect. An image signal is synchronized with timing of the polarization conversion element 4, so that an effect of enhancing image resolution can be achieved.

In some implementations of this application, a group of coils may be disposed on the vibration mechanism 5, so that the spring plate 51 and the polarization conversion element 4 perform translational vibration along one vibration direction, or perform rocking vibration about one rotation axis. A plurality of groups of coils may alternatively be disposed on the vibration mechanism 5, so that the spring plate 51 and the polarization conversion element 4 perform translational vibration along a plurality of vibration directions simultaneously, or perform rocking vibration about a plurality of rotation axes simultaneously.

In some implementations of this application, the first light beam output by the polarization conversion element 4 is capable of being decomposed into two pieces of polarized light whose polarization directions are orthogonal to each other, and an energy ratio of the two pieces of polarized light ranges from 4:6 to 6:4. Preferably, the energy ratio of the two pieces of polarized light is 1:1. The inventors have discovered through exploration that when light incident on any point on the screen 3 is formed by superposition of two beams of light having equal energy and mutually orthogonal polarization directions, the speckle reduction effect can be enhanced. Therefore, the foregoing technical solution can further enhance the speckle reduction effect.

To enable a person skilled in the art to better understand the structure of the polarization conversion element 4, the following describes the polarization conversion element 4 in detail by using two embodiments.

### Embodiment 1

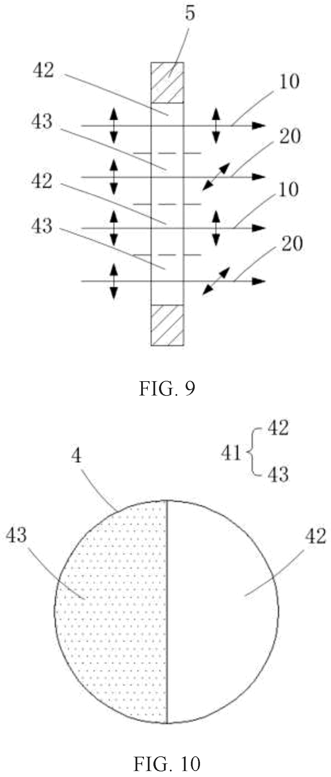

In some implementations of this application, with reference to FIG. 9, at least one first sub-region 42 and at least one second sub-region 43 are disposed on the polarization conversion element 4, and polarization directions of the first light beam output by the first sub-region 42 and the second sub-region 43 are orthogonal to each other. For example, the first sub-region 42 is made of a transparent glass sheet, and the polarization direction of the first light beam incident on the first sub-region 42 remains unchanged after passing through the first sub-region 42, to form first polarized light 10. The second sub-region 43 has a half-wave phase delay, and can change a polarization direction of light. After passing through the second sub-region 43, the polarization direction of the first light beam incident on the second sub-region 43 changes, to form second polarized light 20, and polarization directions of the second polarized light 20 and the first polarized light 10 are orthogonal to each other.

Further, a ratio of a sum of areas of the first sub-regions 42 to a sum of areas of the second sub-regions 43 is 1:1. For example, with reference to FIG. 10, there is one first sub-region 42 and one second sub-region 43, and an area of the first sub-region 42 is equal to an area of the second sub-region 43. The polarization conversion element 4 may be formed by splicing a half-wave plate and a common transparent glass sheet. The first sub-region 42 is a common transparent glass sheet, and the second sub-region 43 is a half-wave plate. The two types of elements may be bonded into one piece with an adhesive or attached to the same substrate glass. Alternatively, the first sub-region 42 and the second sub-region 43 may be defined on a glass substrate through division. The first sub-region 42 has no phase delay, and the second sub-region 43 may be provided with a half-wave phase delay through methods such as coating, film lamination, or application.

### Embodiment 2

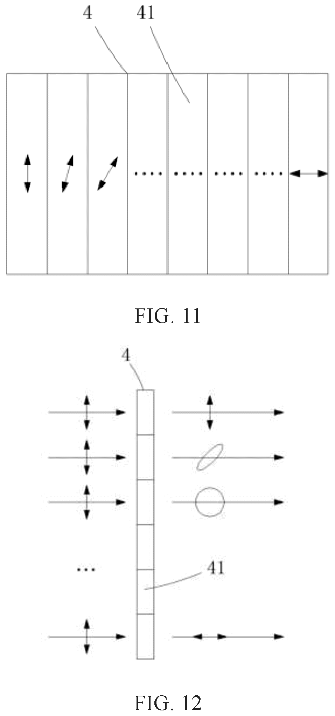

In some implementations of this application, with reference to FIG. 11 and FIG. 12, the polarization conversion element 4 may be a rectangle, the sub-regions 41 are sequentially arranged along a length direction of the rectangle, and widths of the sub-regions 41 are equal. A quantity of the sub-regions 41 is greater than or equal to three, and the sub-regions 41 are sequentially arranged along a first direction. Along the first direction, a crystal axis direction of each sub-region 41 is gradually rotated along a first rotation direction (as shown in FIG. 11), or a phase delay amount of each sub-region 41 gradually increases or decreases (as shown in FIG. 12).

FIG. 11 is a diagram of an embodiment in which the crystal axis direction of each sub-region 41 is gradually rotated along the first rotation direction. The sub-regions 41 in FIG. 11 have different crystal axis orientations, and a delay amount of each sub-region 41 may be 0.5λ or close to 0.5λ, where λ is a wavelength of the first light beam. After the first light beam is incident on the polarization conversion element 4, incident light passing through different sub-regions 41 is converted into linearly polarized light with different polarization directions, and speckle patterns generated by the linearly polarized light with different polarization directions are superimposed on the screen 3, thereby achieving speckle reduction.

FIG. 12 is a diagram of an embodiment in which the phase delay amount of each sub-region 41 gradually increases or decreases. Phase delay amounts of the sub-regions 41 in FIG. 12 are different. After the first light beam is incident on the polarization conversion element 4, incident light passing through different sub-regions 41 is converted into polarized light with different polarization states, which may include linearly polarized light, left-handed circularly polarized light, right-handed circularly polarized light, left-handed elliptically polarized light, right-handed elliptically polarized light, and the like. Speckle patterns generated by the polarized light with different polarization states are superimposed on the screen 3, thereby achieving speckle reduction.

In this application, the crystal axis direction or the phase delay amount of each sub-region 41 is set to vary continuously across the spatial distribution. This continuous variation may avoid an optical diffraction effect caused by an excessively large gradient in the crystal axis direction or phase variation, thereby avoiding problems such as an excessive optical loss and introduction of stray light.

The applicants have verified through experiments that both the foregoing two embodiments are capable of achieving speckle reduction. The following Table 1 is a measured data table of a speckle reduction effect of the speckle reduction apparatus. A speckle contrast of a projection optical system that does not use the speckle reduction apparatus is 9.1%, a speckle contrast of a projection optical system that uses the speckle reduction apparatus in Embodiment 1 is 7.9%, and a speckle contrast of a projection optical system that uses the speckle reduction apparatus in Embodiment 2 is 7.2%. It may be learned that, after the speckle reduction apparatus provided in this application is used, the speckle contrast is obviously reduced.

**Table 1: Measured data table of a speckle reduction effect of the polarization conversion element**

| | Speckle contrast |
|---|---|
| No speckle reduction apparatus used | 9.1% |
| Embodiment 1 | 7.9% |
| Embodiment 2 | 7.2% |

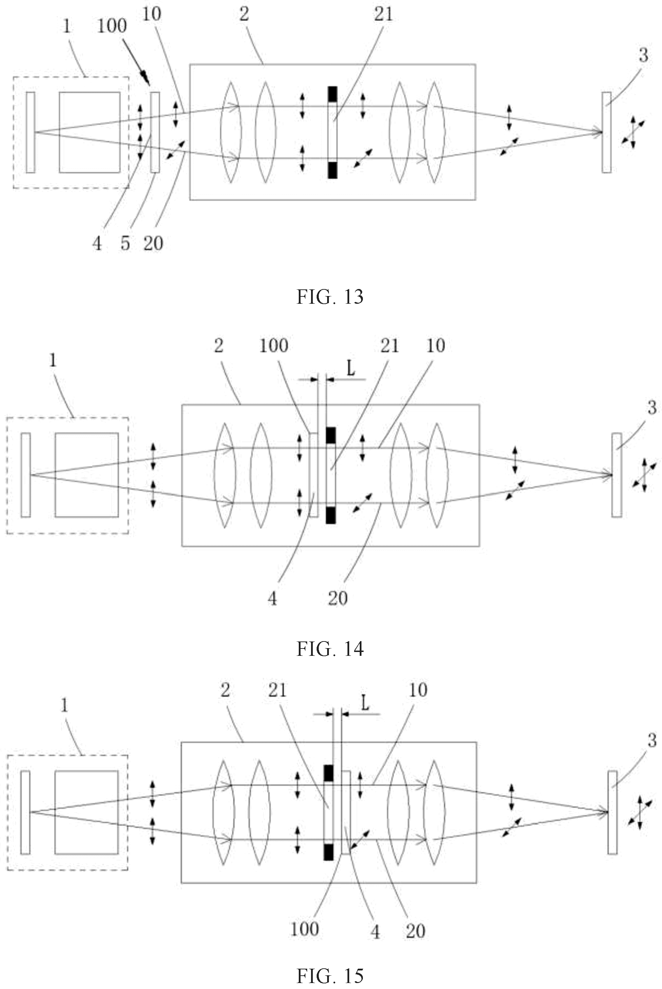

According to a second aspect, this application provides a projection optical system, including any speckle reduction apparatus described with reference to FIG. 1 to FIG. 12 in the foregoing embodiments. The projection optical system provided in this application further includes a light-emitting unit 1 and a lens assembly 2 that are sequentially disposed along a propagation direction of the first light beam, as shown in FIG. 13 to FIG. 15. The light-emitting unit 1 is configured to emit the first light beam, the first light beam carries image information, and the first light beam is propagated from a left side to a right side in FIG. 13, FIG. 14, and FIG. 15. The lens assembly 2 is configured to magnify the first light beam. The speckle reduction apparatus 100 is disposed on a light incident side outside the lens assembly 2 (as shown in FIG. 13) or disposed inside the lens assembly 2 (as shown in FIG. 14 and FIG. 15). The first light beam output by the speckle reduction apparatus 100 is magnified by the lens assembly 2 and then emitted, and the magnified first light beam is used to display an image corresponding to image information.

In some other implementations, the polarization conversion element 4 is disposed in the light-emitting unit 1, to reduce laser speckle. However, because an LCOS system and an LCD system have a high requirement for a polarization state of incident light, if the polarization conversion element 4 is disposed inside the light-emitting unit 1 of the LCOS system and the light-emitting unit 1 of the LCD system, a polarization characteristic of the incident light is disturbed, thereby affecting the optical efficiency and contrast of the LCOS system and the LCD system. Therefore, the technical solution in which the polarization conversion element 4 is disposed inside the light-emitting unit 1 can be applied only to a DLP system that has no requirement on a polarization state of incident light, and cannot be applied to the LCOS system or the LCD system. In this application, the polarization conversion element 4 is disposed inside the lens assembly 2 or disposed on the light incident side outside the lens assembly 2, without affecting the optical efficiency and contrast of the LCOS system and the LCD system. Therefore, an implementation of this application has a wider application field and higher universality. From a perspective of display technologies, the implementation of this application is applicable to various display technologies in the field of home projection, including single-chip LCOS, multi-chip LCOS, single-chip DLP, multi-chip DLP, single-chip LCD, and multi-chip LCD projectors. From a perspective of application scenarios, in addition to the home projectors, the implementation of this application is further applicable to other projection-type products that use laser light as a light source, including a rear-projection television, a laser light source PGU module in a vehicle-mounted HUD, a projection exposure module in a 3D printer, and an image projection module in a structured light 3D scanning device.

In some implementations of this application, with reference to FIG. 13, the polarization conversion element 4 is disposed between an output end of the light-emitting unit 1 and an input end of the lens assembly 2. To enable the polarization conversion element 4 to vibrate, the vibration mechanism 5 cooperating with the polarization conversion element 4 may be separately disposed, or the polarization conversion element 4 may be integrated into an apparatus having vibration performance in the projection optical system. For example, the polarization conversion element 4 may be disposed on a pixel dithering device between the output end of the light-emitting unit 1 and the input end of the lens assembly 2. That is, the pixel dithering device serves as the vibration mechanism 5. Specifically, with reference to FIG. 6, the pixel dithering device includes a spring plate 51, and an opening 52 is provided in the spring plate 51. The opening 52 is covered with a transparent glass sheet. The spring plate 51 can drive the transparent glass sheet to generate highfrequency vibration, to improve pixel resolution of a projected image. When the polarization conversion element 4 is integrated into the pixel dithering device, the transparent glass sheet installed on the pixel dithering device may be removed, the polarization conversion element 4 is then disposed to cover the opening 52, and the spring plate 51 is used to drive the polarization conversion element 4 to vibrate, thereby implementing integration of the polarization conversion element 4 and the pixel dithering device. This further simplifies an apparatus structure, reduces an apparatus size, and saves costs.

In some implementations of this application, a thickness of the polarization conversion element 4 disposed between the output end of the light-emitting unit 1 and the input end of the lens assembly 2 in the propagation direction of the first light beam is less than or equal to 10 mm. This design effectively shortens an optical path length, and can reduce a back focal length of a lens, thereby miniaturizing the projection optical system and reducing the costs.

In some implementations of this application, with reference to FIG. 14 and FIG. 15, an aperture stop 21 is disposed in the lens assembly 2, and the speckle reduction apparatus 100 is disposed on a light incident side of the aperture stop 21 (as shown in FIG. 14) or disposed on a light exit side of the aperture stop 21 (as shown in FIG. 15). For example, a spacing (as shown by a size L in FIG. 14 and FIG. 15) between the polarization conversion element 4 and the aperture stop 21 is less than or equal to 10 mm. The applicants have discovered through exploration that when the first light beam passes through the aperture stop 21, energy of the light is distributed more evenly, and the light passing through any spatial location on the aperture stop 21 contributes with equal weight to any point on the screen 3. Therefore, in this application, the polarization conversion element 4 is disposed near the aperture stop 21, so that light at any point on the screen 3 is obtained by superposing polarized light output by the polarization conversion element 4, and the polarized light output by the polarization conversion element 4 contributes with equal weight to any point on the screen 3, thereby further enhancing a speckle reduction effect.

Further, with reference to FIG. 9, FIG. 14, and FIG. 15, at least one first sub-region 42 and at least one second sub-region 43 are disposed on the polarization conversion element 4 disposed on the light incident side or the light exit side of the aperture stop 21, polarization directions of the first light beam output by the first sub-region 42 and the second sub-region 43 are orthogonal to each other, and a sum of areas of the first sub-regions 42 is equal to a sum of areas of the second sub-regions 43. This design may allow light incident on any point of the screen 3 to be formed by superposition of two beams of light that respectively pass through the first sub-region 42 and the second sub-region 43 and that have equal energy and mutually orthogonal polarization directions, so that the speckle reduction effect of an image on the screen 3 can be optimal.

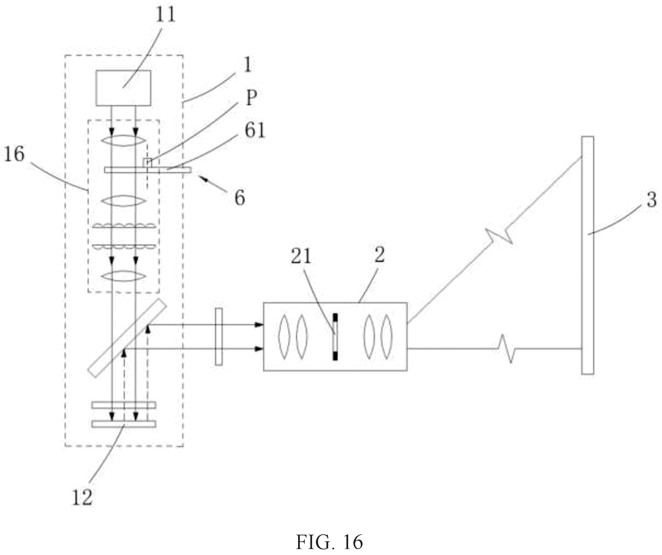

In some implementations of this application, with reference to FIG. 16, the light-emitting unit 1 includes a laser light source 11 and a display device 12. The laser light source 11 is configured to emit a laser light beam. The display device 12 is configured to load the image information onto the laser light beam, to form the first light beam. An illumination shaping optical path 16 is disposed between the laser light source 11 and the display device 12, and the illumination shaping optical path 16 is configured to: homogenize and shape the laser light beam emitted by the laser light source 11, and guide the homogenized and shaped laser light beam onto the display device 12.

In some implementations of this application, with reference to FIG. 16, a diffuser 6 is disposed on the illumination shaping optical path 16, the diffuser 6 is capable of performing translational vibration in a plane in which the diffuser 6 is located or rotating about an axis (as shown by a dashed line L in FIG. 16) perpendicular to the plane in which the diffuser 6 is located, and the diffuser 6 is configured to reduce coherence of the laser light beam in spatial distribution on an incident surface of the polarization conversion element 4. For example, when the diffuser 6 performs translational vibration in the plane in which the diffuser 6 is located, a vibration amplitude of the diffuser 6 is greater than or equal to 0.1 mm in one human eye integration period. For example, when the diffuser 6 rotates about the axis perpendicular to the plane in which the diffuser 6 is located, the diffuser 6 may be a diffuser wheel. The diffuser wheel may include an annular diffuser plate 61 and a motor. The motor is disposed in a middle part of the diffuser plate 61, and can drive the diffuser plate 61 to rotate about an axis of the diffuser plate 61. Specifically, a surface of the diffuser plate 61 has irregular protrusions and recesses. When passing through the diffuser plate 61, the first light beam is subject to a scattering effect of the diffuser plate 61, so that light emitted by the diffuser plate 61 has random angles and phases. Speckle patterns introduced by light of different angles and phases are different, and superposition of these different speckle patterns on the screen 3 are capable of achieving speckle reduction. In addition, in this application, the diffuser plate 61 is configured to rotate, so that when the diffuser plate 61 is at different positions, speckle patterns generated by output light may be different. When the diffuser plate 61 rotates at a high speed, the human eye may see that a plurality of speckle patterns are superimposed with each other within an integration period. The superimposed speckle patterns produce an averaging effect, and the laser speckle perceived by the human eye is reduced, thereby further enhancing the speckle reduction effect.

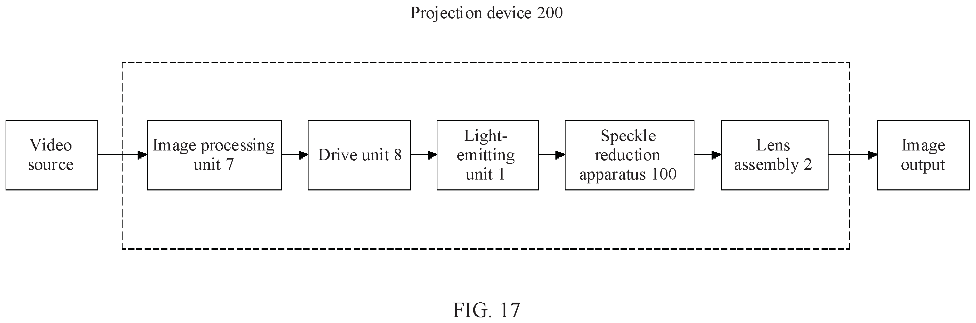

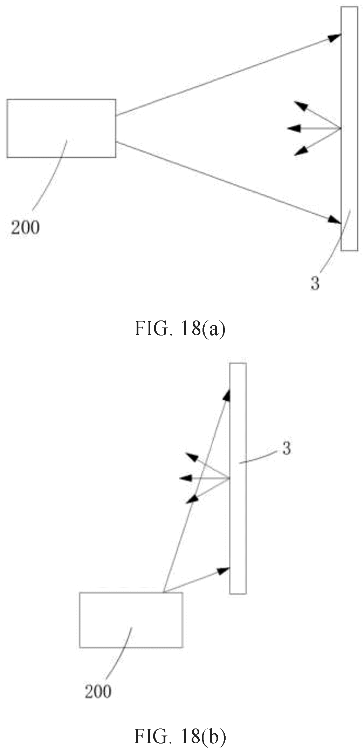

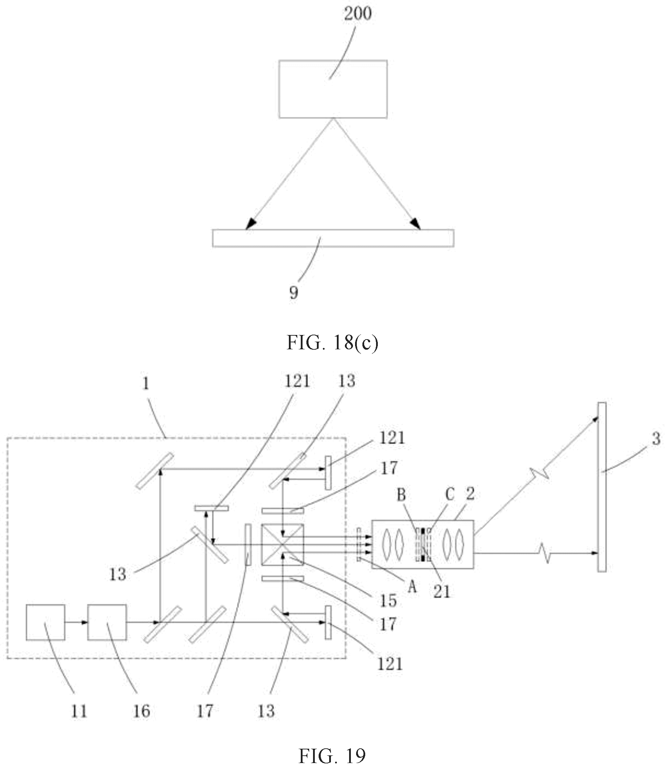

According to a third aspect, this application provides a projection device, including any projection optical system described with reference to FIG. 13 to FIG. 16 in the foregoing embodiments, and further including an image processing unit 7 and a drive unit 8. The image processing unit 7 is configured to process an input image or video source. The drive unit 8 is configured to: receive information output by the image processing unit 7, and drive the projection optical system. For example, with reference to FIG. 17, the projection device 200 includes the image processing unit 7, the drive unit 8, the light-emitting unit 1, the speckle reduction apparatus 100, and the lens assembly 2. The projection device 200 can project an image and a video onto the screen 3 or a target surface 9, as shown in FIG. 18(a) to FIG. 18(c).

The projection device provided in this application may be a single-chip projection device, or may be a multi-chip projection device. For example, FIG. 19 is a diagram of an optical system of a three-chip LCOS projector. In FIG. 19, the laser light source 11 emits a laser light beam, and the laser light beam enters a beam splitting and combining system after being homogenized and shaped by the illumination shaping optical path 16. The laser light beam is sequentially split into red, green, and blue light beams in the beam splitting and combining system. The light beams pass through the polarization beam splitter 13, and are then respectively incident on three different LCOS display devices 121. The light beams emitted from the LCOS display devices 121 are subject to a beam splitting function of the polarization beam splitter 13, and then pass through the analyzer 17 and the beam combining prism 15 to be combined into one light beam, that is, the first light beam. The first light beam is propagated from a left side to a right side in FIG. 19, and is projected on the screen 3 after being magnified by the lens assembly 2. When the display apparatus provided in this application is used in the three-chip projector shown in FIG. 19, the speckle reduction apparatus 100 may be disposed at a position A, a position B, or a position C in FIG. 19, to achieve the speckle reduction effect.

The foregoing describes implementations of this application in specific embodiments, and other advantages and effects of this application may be readily understood by a person skilled in the art from content disclosed in this specification. Although this application is described with reference to some embodiments, this does not mean that features of this application are limited only to the implementations. On the contrary, a purpose of describing this application with reference to an implementation is to cover another option or modification that may be derived based on the claims of this application. This application may alternatively be implemented without using these details. In addition, to avoid confusion or blurring a focus of this application, some details are omitted from the descriptions. It should be noted that embodiments in this application and the features in embodiments may be mutually combined in the case of no conflict.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

The term "and/or" in embodiments of this application describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects.

In the descriptions of embodiments of this application, it should be noted that the terms "mount" and "connection" should be understood in a broad sense unless there is a clear stipulation and limitation. For example, "connection" may be a detachable connection, a nondetachable connection, a direct connection, or an indirect connection through an intermediate medium.

In the descriptions of this application, it should be noted that an orientation or a position relationship indicated by the terms "upper", "lower", "top", "bottom", and the like is an orientation or a position relationship based on the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In the descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. A person of ordinary skill in the art may understand specific meanings of the foregoing terms in this application based on a specific situation.

It is clearly that a person skilled in the art can make various modifications and variations to this application without departing from the spirit and scope of this application. This application is intended to cover these modifications and variations of this application provided that they fall within the scope of the claims and equivalent technologies thereof.

## Claims

1. A speckle reduction apparatus, comprising:
a polarization conversion element, wherein at least two sub-regions are disposed on the polarization conversion element, and at least one of the sub-regions is capable of converting a polarization state of a first light beam incident thereon, so that the polarization conversion element outputs the first light beam with at least two different polarization states; and
a vibration mechanism, connected to the polarization conversion element, wherein the vibration mechanism is configured to drive the polarization conversion element to vibrate.

2. The speckle reduction apparatus according to claim 1, wherein the vibration mechanism comprises:
a spring plate, wherein an opening is provided in the spring plate, and the polarization conversion element covers the opening; and
an electromagnetic induction mechanism, configured to drive the spring plate and the polarization conversion element to vibrate.

3. The speckle reduction apparatus according to claim 2, wherein the spring plate has a rectangular outer contour, and the vibration mechanism is capable of driving the polarization conversion element to perform translational vibration in a plane in which the polarization conversion element is located, or rocking vibration about a rotation axis perpendicular to an incident direction of the first light beam, or rocking vibration about a plurality of rotation axes simultaneously.

4. The speckle reduction apparatus according to claim 3, wherein
when the polarization conversion element performs translational vibration, a vibration direction of the polarization conversion element is a length direction, a width direction, or a diagonal direction of the spring plate; and
when the polarization conversion element performs rocking vibration, the rotation axis extends along the length direction of the spring plate, or extends along the width direction of the spring plate, or extends along the diagonal direction of the spring plate.

5. The speckle reduction apparatus according to claim 1, wherein the first light beam output by the polarization conversion element is capable of being decomposed into two pieces of polarized light whose polarization directions are orthogonal to each other, and an energy ratio of the two pieces of polarized light ranges from 4:6 to 6:4.

6. The speckle reduction apparatus according to any one of claims 1 to 5, wherein at least one first sub-region and at least one second sub-region are disposed on the polarization conversion element, polarization directions of the first light beam output by the first sub-region and the second sub-region are orthogonal to each other, and a sum of areas of the first sub-regions is equal to a sum of areas of the second sub-regions.

7. The speckle reduction apparatus according to any one of claims 1 to 5, wherein a quantity of the sub-regions is greater than or equal to three, the sub-regions are sequentially arranged along a first direction, and along the first direction, a crystal axis direction of each sub-region is gradually rotated along a first rotation direction, or a phase delay amount of each sub-region gradually increases or decreases.

8. The speckle reduction apparatus according to claim 1, wherein a vibration frequency of the polarization conversion element ranges from 30 Hz to 240 Hz.

9. A projection optical system, comprising the speckle reduction apparatus according to any one of claims 1 to 8, and further comprising:
a light-emitting unit, configured to emit the first light beam, wherein the first light beam carries image information; and
a lens assembly, configured to magnify the first light beam, wherein
the speckle reduction apparatus is disposed on a light incident side outside the lens assembly or disposed inside the lens assembly, the first light beam output by the speckle reduction apparatus is magnified by the lens assembly and then emitted, and the magnified first light beam is used to display an image corresponding to the image information.

10. The projection optical system according to claim 9, wherein the speckle reduction apparatus is disposed between an output end of the light-emitting unit and an input end of the lens assembly, the vibration mechanism is a pixel dithering device disposed between the output end of the light-emitting unit and the input end of the lens assembly, the pixel dithering device comprises a spring plate, an opening is provided in the spring plate, and the polarization conversion element covers the opening of the spring plate.

11. The projection optical system according to claim 9, wherein an aperture stop is disposed in the lens assembly, and the speckle reduction apparatus is disposed on a light incident side of the aperture stop or disposed on a light exit side of the aperture stop.

12. The projection optical system according to claim 11, wherein a spacing between the polarization conversion element and the aperture stop is less than or equal to 10 mm.

13. The projection optical system according to claim 9, wherein the light-emitting unit comprises:
a laser light source, configured to emit a laser light beam; and
a display device, configured to load the image information onto the laser light beam, to form the first light beam.

14. The projection optical system according to claim 13, wherein an illumination shaping optical path is disposed between the laser light source and the display device, and the illumination shaping optical path is configured to: homogenize and shape the laser light beam emitted by the laser light source, and guide the homogenized and shaped laser light beam onto the display device; and a diffuser is disposed on the illumination shaping optical path, the diffuser is capable of performing translational vibration in a plane in which the diffuser is located or rotating about an axis perpendicular to the plane in which the diffuser is located, and the diffuser is configured to reduce coherence of the laser light beam in spatial distribution.

15. The projection optical system according to claim 14, wherein when the diffuser performs translational vibration in the plane in which the diffuser is located, a vibration amplitude of the diffuser is greater than or equal to 0.1 mm in one human eye integration period.

16. A projection device, comprising the projection optical system according to any one of claims 9 to 15, and further comprising:
an image processing unit, configured to process an input image or video source; and
a drive unit, configured to: receive information output by the image processing unit, and drive the projection optical system.
